# EUROPÄISCHE PATENTSCHRIFT

(11) **EP 1 623 890 B1**
(45) Veröffentlichungstag und Bekanntmachung des Hinweises auf die Patenterteilung: **21.01.2009**
(21) Anmeldenummer: 05107293.2
(22) Anmeldetag: 08.08.2005
(51) Int. Cl.: B60R 21/26, F17C 13/06

(54) **Gasgenerator**
Gasgenerator
Generateur de gaz

(30) Priorität: 06.08.2004 AT 5692004 U
(43) Veröffentlichungstag der Anmeldung: 08.02.2006
(73) Patentinhaber: iSi Airbag GmbH, 1210 Wien (AT)
(72) Erfinder: Schäfer, Dietmar, 1130, Wien (AT)
(74) Vertreter: KLIMENT & HENHAPEL

(56) Entgegenhaltungen:
- WO-A-03/068567
- US-A- 3 913 604
- US-A- 6 012 737
- US-A1- 2002 036 399
- US-A1- 2003 042 720
- US-A1- 2003 227 160

## Beschreibung

Die vorliegende Erfindung bezieht sich auf einen Gasgenerator zum Aufblasen eines Gassacks, insbesondere eines Airbags, mit einem Gasdruckbehälter und einem Ausströmkanal, durch welchen das im Gasdruckbehälter gespeicherte Gas in den Gassack strömt, wobei ein den Ausströmkanal verschließendes, zerstörbares Dichtelement, vorzugsweise eine Membran vorgesehen ist, welches im Betriebszustand des Gasgenerators sich zumindest entlang eines Abschnittes des Ausströmkanals in Strömungsrichtung des Gases von einem Bereich außerhalb des Ausströmkanals in denselben erstreckt und ein Öffnungsmechanismus umfassend eine Zündpille und eine Düsenkammer zum Zerstören des Dichtelements mittels eines auf das Dichtelement fokussierten, durch Zündung der Zündpille erzeugten Heißgasstrahls vorgesehen ist, gemäß dem Oberbegriff des Anspruchs 1.

Solche Gasgeneratoren dienen dazu, im Funktionsfall mittels gespeichertem Gas einen damit verbundenen Gassack, beispielsweise einen Airbag in einem Auto, aufzublasen.

In der Regel erfolgt die Auslösung des Aufblasevorgangs durch das Überschreiten eines Verzögerungsgrenzwertes. Durch einen elektrischen Impuls wird in weiterer Folge eine pyrotechnische Zündladung gezündet, die die Zerstörung des Dichtelementes bewirkt. Das im Gasdruckbehälter gespeicherte Gas entweicht daraufhin in den mit dem Gasdruckbehälter verbundenen Gassack und bläst diesen auf.

Von besonderer Wichtigkeit dabei ist das einwandfreie Öffnen des Dichtelements. Dies muss reproduzierbar erfolgen, dh. das Öffnen muss seitens des Herstellers garantiert werden können. Bisher bekannte Dichtelemente sind, wie bereits erwähnt, als Membrane ausgebildet und öffnen vorwiegend aufgrund des hohen Innendrucks des im Gasdruckbehälter gespeicherten Gases. Die pyrotechnische Zündladung kann beispielsweise in einer sogenannten Zündpille gespeichert sein. Bei Anlegen einer elektrischen Spannung an die Zündpille explodiert die Zündladung, wobei ein Heißgasstrom sowie Partikel der Zündpille mit hohem Druck auf die Membran geleitet werden, was, in Kombination mit dem hohen Druck im Gasdruckbehälter, zur Zerstörung der Membran führt. Dieser Vorgang wird ausführlich in der gattungsgemäßen WO 03/068567 A1 beschrieben. Bei bekannten Membranen kann jedoch die Auswirkung der Explosion der pyrotechnischen Zündladung nicht vorhergesehen werden. Mit anderen Worten die Art und Weise der Zerstörung der Membran erfolgt mehr oder weniger unkontrolliert und nicht vorhersagbar. Dies stellt aber einen Unsicherheitsfaktor dar, was die Reproduzierbarkeit des Massenstroms beim Aufblasen des Airbags betrifft. Weiters können durch unkontrolliertes Öffnen einer Membran auch Membranpartikel in den Airbag eingebracht werden, was zu einer Beschädigung des Systems führen kann.

Es ist daher ebenfalls bekannt, die Membran mit Kerbungen zu versehen, welche das Materialgefüge des Dichtelements örtlich begrenzt verändern. Die Kerbungen erfolgen in Form von sternförmig über den Mittelpunkt der Membran verlaufenden Geraden, weswegen sie auch Kreuzkerbungen genannt werden. Dadurch ist es möglich, die Zerstörung der Membran im Mittelpunkt derselben einzuleiten wobei die Zerstörung entlang dieser Kreuzkerben fortschreitet.

Diese bekannten Kreuzkerbungen weisen jedoch den Nachteil auf, dass sie durch den höchstbelasteten Punkt der Membran, nämlich deren Mittelpunkt verlaufen. Da im Betriebszustand der Innendruck des Gasdruckbehälters voll auf der Membran aufliegt, ist deren Mittelpunkt am höchsten belastet. Eine Kerbung im Mittelpunkt der Membran sowie im diesen umgebenden Mittenbereich stellt daher ein erhöhtes Sicherheitsrisiko dar. Insbesondere bei wechselnder Belastung wie sie z.B. durch die Einwirkung von wechselnden Temperaturen induziert wird ist hier eine signifikant niedrigere Lebensdauer zu beobachten. Weiters wird dafür eine relativ dicke Membrane benötigt, um überhaupt eine Kerbe in diesem Bereich einbringen zu können. Des weiteren muss jede Membran einzeln zusätzlich bearbeitet werden.

Eine solche Membran mit Kreuzkerbung ist beispielsweise aus der US 3,913,604 B bekannt. Die dortige Fluidentladungsvorrichtung arbeitet zusätzlich mit einem zugespitzten Kolben, welcher die Membran im Auslösefall zerstört. Diese Art von Auslösemechanismus weist jedoch den Nachteil einer komplizierten Herstellung auf.

Es ist daher die Aufgabe der vorliegenden Erfindung die erwähnten Nachteile zu verhindern und einen Gasgenerator der eingangs erwähnten Art vorzuschlagen, dessen Dichtelement, insbesondere dessen Membran, eine geringe Versagenswahrscheinlichkeit aufweist und dennoch verlässlich und reproduzierbar öffnet, wobei der Herstellaufwand einfach gehalten werden soll.

Erfindungsgemäß wird dies durch die kennzeichnenden Merkmale des Anspruchs 1 erreicht.

Durch die Tatsache, dass im Betriebszustand des Gasgenerators, also bei befülltem Gasdruckbehälter, das Dichtelement voll druckbeaufschlagt ist, wölbt sich dieses in den Ausströmkanal, da es in Strömungsrichtung gesehen unmittelbar vor diesem, an dessen Stirnfläche angeordnet ist. Durch das Vorsehen von Andruckmitteln mit genau definierten Kontaktzonen, gegen welche das Dichtelement durch den Gasdruck des im Gasdruckbehälter gespeicherten Gases gepresst wird, entstehen im Dichtelement inhomogene Spannungszustände, welche das reproduzierbare Öffnen des Dichtelementes ermöglichen. Mit anderen Worten ermöglicht die spezielle Formgebung der Andruckmittel ein vorherbestimmbares Öffnen der Membran, ohne die Membran selbst entsprechend manipulieren zu müssen, wie dies aus dem Stand der Technik bekannt ist.

Gemäß einer bevorzugten Ausführungsvariante wie in Anspruch 2 beschrieben, ist das Dichtelement ungekerbt ausgeführt. Dies bedeutet, dass das Dichtelement keine künstlich zugefügten Materialschwächungen benötigt, um verlässlich und reproduzierbar zu öffnen.

Gemäß den kennzeichnenden Merkmalen des Anspruchs 3 handelt es sich bei den Andruckmitteln um den Ausströmkanal selbst. Durch die spezielle Ausbildung des Querschnitts des Ausströmkanals im Bereich des Übergangs des Dichtelements von außerhalb des Ausströmkanals in den Ausströmkanal hinein, wird erreicht, dass die Verformung des Dichtelementes in diesem Übergangsbereich derart verläuft, dass durch die dabei entstehenden inhomogenen Spannungszustände im Dichtelement ein reproduzierbares Öffnen desselben möglich ist.

Die kennzeichnenden Merkmale der Ansprüche 4 und 6 beschreiben zwei unterschiedliche Ausführungsvarianten des Ausströmkanals.

Gemäß den kennzeichnenden Merkmalen des Anspruchs 4 wird dieser durch eine im Gasdruckbehälter angeordnete Ausströmöffnung gebildet, wobei das Dichtelement an der Innenseite des Gasdruckbehälters vor der Ausströmöffnung angeordnet ist.

Gemäß den kennzeichnenden Merkmalen des Anspruchs 6 wird dieser durch eine an einem Dichtelementträger angeordnete Durchgangsöffnung gebildet. Der Dichtelementträger schließt dabei gasdicht an eine Ausströmöffnung des Gasdruckbehälters an und weist eine Durchgangsöffnung auf, die konzentrisch zur Ausströmöffnung des Gasdruckbehälters angeordnet ist. Das Dichtelement ist zwischen Ausströmöffnung und der den Ausströmkanal bildenden Durchgangsöffnung des Dichtelementträgers befestigt.

Selbstverständlich sind auch noch andere Ausführungsvarianten denkbar, bei welchen der Ausströmkanal anders aufgebaut ist, ohne dass diese Ausführungsvarianten jedoch aus dem Schutzbereich der vorliegenden Ansprüche herausführen.

Die kennzeichnenden Merkmale der Ansprüche 5 und 7 beschreiben jeweils eine bevorzugte Ausbildung der den Ausströmkanal bildenden Öffnung, nämlich mit vieleckigen oder elliptischen Querschnitten. Diese Querschnitte haben sich in der Praxis als besonders vorteilhaft erwiesen was die Reproduzierbarkeit des Öffnens des Dichtelementes angeht.

Die kennzeichnenden Merkmale des Anspruchs 8 beschreiben eine weitere Ausführungsvariante eines erfindungsgemäßen Gasgenerators, bei welcher ebenfalls Andruckmittel vorgesehen sind, die ein reproduzierbares Öffnen des Dichtelements ermöglichen. Bei diesen Andruckmittel handelt es sich jedoch nicht um den Ausströmkanal selbst sondern um ein in den Ausströmkanal ragendes Stempelelement, welches den Erstreckungsweg des Dichtelements in den Ausströmkanal hinein begrenzt. Durch die erfindungsgemäße Formgebung des Stempelelements, ist ebenfalls gewährleistet, dass sich das Dichtelement beim Anlegen an das Stempelelement derart verformt, dass durch die dabei entstehenden Inhomogenen Spannungszustände im Dichtelement ein reproduzierbares Öffnen desselben möglich ist. Der Querschnitt des Ausströmkanals ist in diesem Fall nur von untergeordneter Bedeutung, da die erfindungsgemäßen inhomogenen Spannungszustände ausreichend über das Stempelelement bewirkt werden.

Die kennzeichnenden Merkmale des Anspruchs 9 beschreiben eine zur im Anspruch 7 beschriebenen identische Ausführungsvariante mit dem Unterschied, dass das Stempelelement beweglich ausgeführt ist und die Membran auf diese Art und Weise zerstört wird, wohingegen die Zerstörung bei einer Ausführungsvariante wie in Anspruch 8 beschrieben, einzig und allein durch die Zündladung erfolgt.

Im Anschluss erfolgt nun eine detaillierte Beschreibung der Erfindung anhand eines Ausführungsbeispiels. Dabei zeigt:
- Fig.1: eine Schnittansicht eines Gasgenerators
- Fig.2: eine Schnittansicht eines Membranträgers im unbelasteten Zustand der Membran
- Fig.3: eine Schnittansicht eines Membranträgers im unbelasteten Zustand der Membran
- Fig.4-Fig.7: eine Aufsicht auf einen erfindungsgemäßen Dichtelementträger
- Fig.8: eine Schnittansicht eines Dichtelementrägers samt Stempelelement
- Fig.9: eine Aufsicht auf einen Dichtelementträger samt Stempelelement gemäß Fig.8
- Fig.10: eine Schnittansicht eines Dichtelementrägers samt Stempelelement
- Fig.11: eine Aufsicht auf einen Dichtelementträger samt Stempelelement gemäß Fig.10

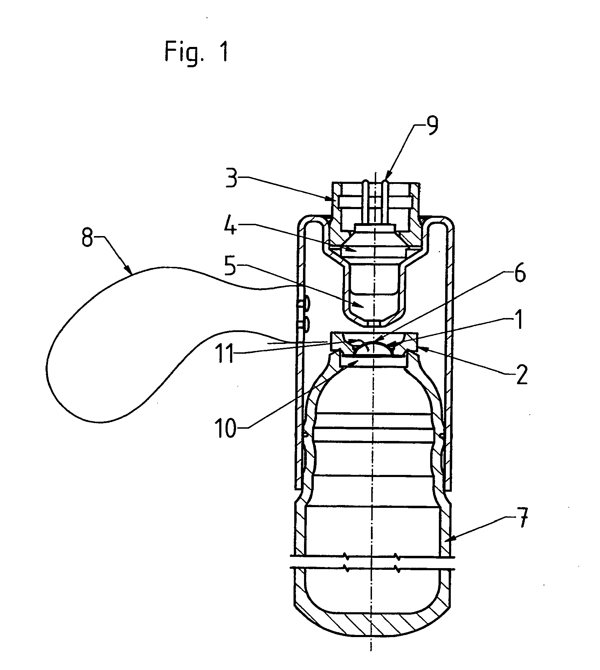

Fig.1 zeigt beispielhaft einen Gasgenerator, wie er zum Aufblasen von Airbags in Kraftfahrzeugen zum Einsatz kommt.

Dieser besteht aus einem Gasdruckbehälter 7 dessen Ausströmöffnung 10 mittels eines Dichtelements 1, vorzugsweise einer Membran, verschlossen ist. Die Membran 1 ist dabei an einem Dichtelementträger 2, der eine Durchgangsöffnung 11 aufweist, befestigt vorzugsweise angeschweißt.

Im Bereich oberhalb des Dichtelementträgers 2 ist ein Öffnungsmechanismus angeordnet, welcher zur Zerstörung der Membran 1 dient und im wesentlichen aus einer Zündpillenhalterung 3, einer Zündpille 4 und einer Düsenkammer 5 besteht.

Bei der Zündpille 4 handelt es sich um einen bekannten Anzünder, dessen wesentlicher Aufbau eine geringe Menge an pyrotechnischer Zündladung in einem Gehäuse aufweist. In die Zündladung sind von außerhalb der Zündpille 4 elektrisch kontaktierbare Zündpins 9 geführt, welche nach Anlegen einer Spannung die Zündladung zünden.

Soll der Gassack 8 aufgeblasen werden, wird zuerst die Zündpille 4 durch Anlegen eines elektrischen Zündimpulses gezündet. Die dabei frei werdende Energie wird in der Düsenkammer 5 gebündelt und als Heißgasstrahl auf die Membran 1 geleitet. Am höchsten Punkt 6 der Membran 1 tritt im Zuge der Druckbelastung durch die Gasfüllung die höchste Spannung auf, wodurch sich dort ihre dünnste Stelle ergibt. Mit anderen Worten ist die Festigkeit der Membran 1 am Punkt 6 am geringsten.

Der bisher beschriebene Gasgenerator entspricht im wesentlichen bereits bekannten Gasgeneratoren, soll jedoch nur beispielhaft die Funktionsweise näher erläutern. In der Praxis existieren eine Vielzahl unterschiedlicher Gasgeneratoren, beispielsweise mit zusätzlichen pyrotechnischen Treibsätzen außerhalb der Zündpille, mit unterschiedlich angeordneten Zündpillen, mit mehreren Gasdruckbehältern, etc.. Es sind beispielsweise auch Gasgeneratoren bekannt, die auf den Einsatz eines Dichtelementträgers 2 vollkommen verzichten und das Dichtelement 1 im Inneren des Gasdruckbehälters 7, direkt vor dessen Ausströmöffnung 10 anordnen.

Die vorliegende erfindungsgemäße Membran 1 kann unabhängig vom den restlichen Merkmalen dieser Gasgeneratoren eingesetzt werden. Wie der Fachmann sofort erkennen kann, ist es lediglich von Bedeutung, dass die Membran 1 einen Ausströmkanal verschließt, aus welchem in einem Gasdruckbehälter 7 gespeichertes Gas in einen Gassack strömt. Der Aufbau des Ausströmkanals ist dabei, mit Ausnahme der Verwirklichung der erfindungsgemäßen Merkmale, nicht wesentlich und kann auf unterschiedliche Arten erfolgen.

Bei dem in Fig.1 beschriebenen Gasgenerator wird der Ausströmkanal von der Durchgangsöffnung 11 des Dichtelementträgers 2 gebildet.

Bei Gasgeneratoren die keinen Dichtelementträger aufweisen, wird der Ausströmkanal von der Austrittsöffnung 10 des Gasdruckbehälters 7 gebildet.

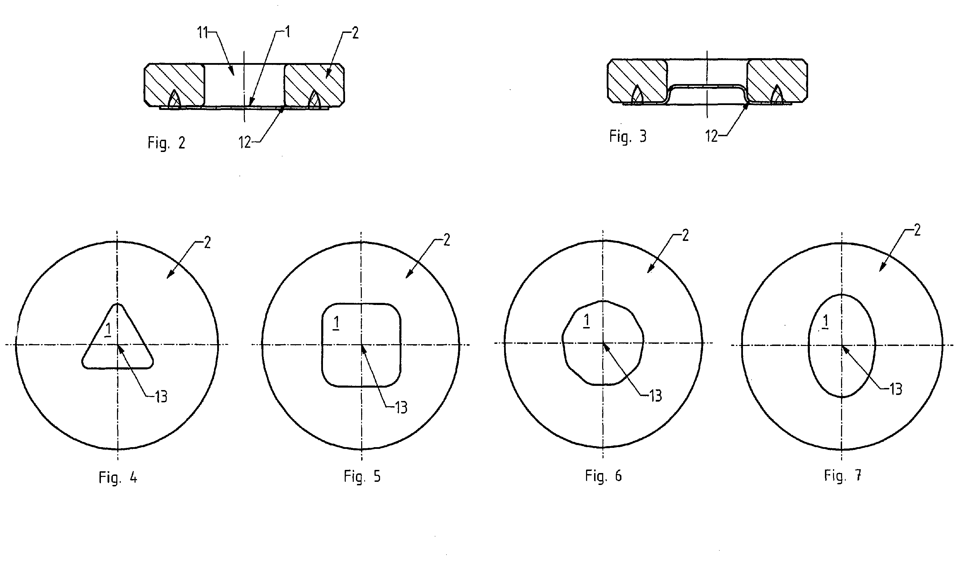

Fig.2 und Fig.3 zeigen beide eine Schnittansicht eines Dichtelementträgers 2 samt Membran 1 im unbelasteten, also nicht druckbeaufschlagten Zustand. In Fig.3 ist die Membran 1 vorgewölbt ausgeführt, was an der abgeflachten Wölbung erkennbar ist. Die Membran 1 ist am Dichtelementträger 2 angeschweißt und spannt sich quer über die Durchgangsöffnung 11. Im druckbeaufschlagten Zustand der Membran 1, also bei gefülltem Gasdruckbehälter 7 wölbt sich die Membran 1 in den von der Durchgangsöffnung 11 gebildeten Ausströmkanal im wesentlichen kugelförmig (siehe Fig.1). Im Falle der eines Dichtelements gemäß Fig.3 wird die Verformung durch die Druckbeaufschlagung der Vorwölbung überlagert. Der Dichtelementträger 2 bildet dabei ein Andruckmittel für die Membran 1, gegen welches diese aufgrund der Druckbeaufschlagung gepresst wird. Der Übergang der Membran 1 von außerhalb des Ausströmkanals in den Ausströmkanal hinein erfolgt dabei entlang einer Andruckkante 12 des Dichtelementträgers 2, die durchaus auch abgerundet ausgeführt sein kann, mit geschlossenem Umriss, wobei die Andruckkante 12 erfindungsgemäß Abschnitte aufweist, die von einem in derselben Ebene, wie die Andruckkante 12 liegenden Mittelpunkt 13 des Ausströmkanals unterschiedlich weit entfernt sind.

Mit anderen Worten weist die Durchgangsöffnung 11 des Dichtelementträgers 2 einen nicht-kreisrunden Querschnitt auf, also beispielsweise eine vieleckigen Querschnitt, wie in den Fig.4 bis Fig.6 ersichtlich oder einen elliptischen Querschnitt, wie in Fig. 7 ersichtlich.

Durch die Ausbildung einer so geformten Andruckkante 12 und Anpressen der Membran 1 dagegen, werden in der Membran 1 inhomogene Spannungszustände hervorgerufen, welche ein reproduzierbares Zerstören der Membran 1 durch einen Öffnungsmechanismus ermöglichen und somit die Auslösesicherheit verbessern.

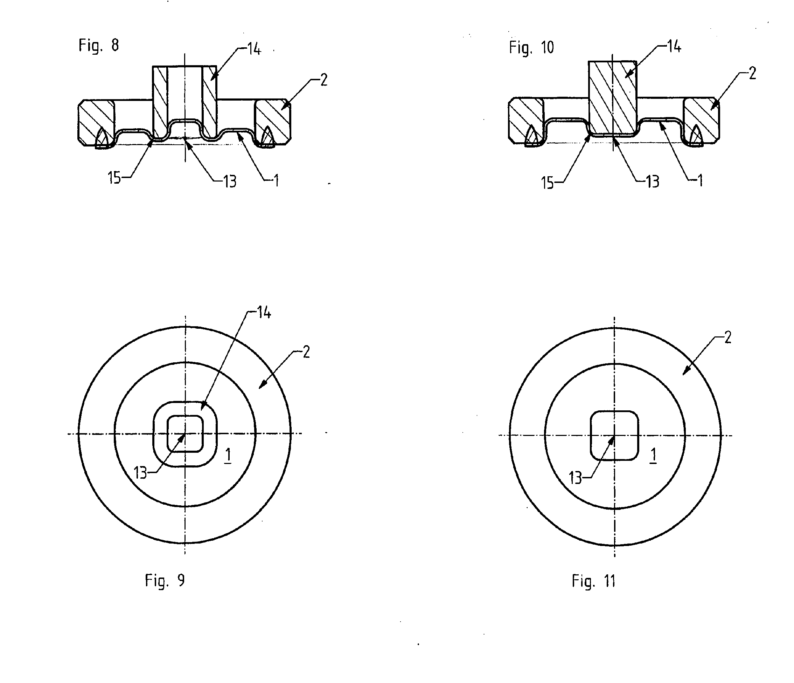

Fig.8 und Fig.10 zeigen beide eine alternative Ausführungsvariante eines Andruckmittels. Der Ausströmkanal wird beispielsweise wiederum durch die Durchgangsöffnung 11 des Dichtelementträgers 2 gebildet, dessen Querschnitt jedoch im vorliegenden Fall über die gesamte Länge auch durchaus kreisrund ausgeführt sein kann, womit sich auch eine kreisrund ausgebildete Andruckkante ergibt. Ein solche kreisrunde Ausführung des Querschnitts bzw. der Andruckkante ist auch schon bekannt, reicht jedoch nicht aus, um die erwähnten erfindungsgemäßen inhomogenen Spannungszustände hervorzurufen, die sich in der Membran 1 bei einem nicht-kreisrunden Querschnitt bzw. einer nicht kreisrunden Andruckkante 12 einstellen.

Als Ausgleich dafür und um ein reproduzierbares Öffnen der Membran zu ermöglichen, ist ein Stempelelement 14 fix oder beweglich im Ausströmkanal angeordnet. Das Stempelelement begrenzt die Erstreckung der Membran 1 im Ausströmkanal bzw. legt sich die Membran 1 an diesen an und zwar erfindungsgemäß an zumindest einer Andruckkante 15 mit geschlossenen Umriss, die Abschnitte aufweist, die von einem in derselben Ebene wie die Andruckkante 12 liegenden Mittelpunkt 13 des Ausströmkanals unterschiedlich weit entfernt sind. Die Befestigung des Stempelelementes 14 kann auf unterschiedlichste Arten erfolgen, beispielsweise im Ausströmkanal, im Zündgehäuse, etc..

Dadurch werden wieder die erfindungsgemäßen inhomogenen Spannungszustände in der Membran hervorgerufen, die für ein reproduzierbares Öffnen derselben Sorge tragen.

Die Zerstörung der Membran 1 erfolgt entweder aufgrund der beschrieben Zündladung alleine oder aber durch das bewegliche Stempelelement 14, das von der Zündladung in die Membran 1 gestoßen wird.

## Patentansprüche

1. Gasgenerator zum Aufblasen eines Airbags, mit einem Gasdruckbehälter (7) und einem Ausströmkanal (10,11), durch welchen das im Gasdruckbehälter (7) gespeicherte Gas in den Gassack (8) strömt, wobei ein den Ausströmkanal verschließendes, zerstörbares Dichtelement (1), vorzugsweise eine Membran vorgesehen ist, welches im Betriebszustand des Gasgenerators sich zumindest entlang eines Abschnittes des Ausströmkanals (10,11) in Strömungsrichtung des Gases von einem Bereich außerhalb des Ausströmkanals (10,11) in denselben erstreckt, indem sich das druckbeaufschlagte Dichtelement (1) in den Ausströmkanal (10,11) wölbt, und ein Öffnungsmechanismus (3,4,5), umfassend eine Zündpille (4) und eine Düsenkammer (5) zum Zerstören des Dichtelements (1) mittels eines auf das Dichtelement (1) entgegen der Strömungsrichtung des Gasdruckbehältergases fokussierten, durch Zündung der Zündpille (4) erzeugten Heißgasstrahls vorgesehen ist, wobei das Dichtelement (1) ungekerbt ausgeführt ist und wobei Andruckmittel (2,10,11,14) vorgesehen sind, gegen welche das Dichtelement (1) bei gefülltem Gasdruckbehälter (7) pressbar ist und der Kontakt zwischen Dichtelement (1) und den Andruckmitteln (2,10,11,14) zumindest entlang einer Andruckkante (12,15) mit geschlossenem Umriss erfolgt und der Übergang der Membran (1) von außerhalb des Ausströmkanals in den Ausströmkanal hinein entlang der Andruckkante (12,15) erfolgt, **dadurch gekennzeichnet, dass** die Andruckkante (12,15) Abschnitte aufweist, die von einem in derselben Ebene wie die Andruckkante (12) liegenden Mittelpunkt (13) des Ausströmkanals (10,11) unterschiedlich weit entfernt sind.

2. Gasgenerator nach Anspruch 1, **dadurch gekennzeichnet, dass** das Andruckmittel (2,10,11,14) der Ausströmkanal (10,11) ist, dessen Querschnittsumriss im Bereich des Übergangs des Dichtelements (1) von außerhalb des Ausströmkanals (10,11) in den Ausströmkanal (10,11), Abschnitte mit unterschiedlichem Abstand zum in derselben Ebene wie die Querschnittsfläche in diesem Bereich liegenden Mittelpunkt (13) des Ausströmkanals (10,11) aufweist.

3. Gasgenerator nach Anspruch 2, **dadurch gekenntzeichnet**, dass der Ausströmkanal (10,11) durch eine im Gasdruckbehälter (7) angeordnete Ausströmöffnung (10) gebildet ist und das Dichtelement (1) an der Innenseite des Gasdruckbehälters (7) vor der Ausströmöffnung (10) angeordnet ist.

4. Gasgenerator nach Anspruch 3, **dadurch gekennzeichnet, dass** die Ausströmöffnung (10) einen vieleckige oder elliptischen Querschnitt aufweist .

5. Gasgenerator nach Anspruch 2, **dadurch gekennzeichnet, dass** der Ausströmkanal (10,11) durch eine an einem Dichtelementträger (2) angeordnete Durchgangsöffnung (11) gebildet ist, wobei der Gasdruckbehälter (7) eine Ausströmöffnung (10) aufweist und daran gasdicht anschließend der Dichtelementträger (2) befestigt ist und die Durchgangsöffnung (11) konzentrisch zur Ausströmöffnung (10) angeordnet ist, wobei das Dichtelement (1) zwischen Ausströmöffnung (10) und der Durchgangsöffnung (11) des Dichtelemeritträgers (2) befestigt ist.

6. Gasgenerator nach Anspruch 5, **dadurch gekennzeichnet, dass** die Durchgangsöffnung (11) einen vieleckigen oder elliptischen Querschnitt aufweist.

7. Gasgenerator nach Anspruch 1, **dadurch gekennzeichnet, dass** das Andruckmittel (2,10,11,14) ein im Bereich des Dichtelements (1) in den Ausströmkanal (10,11) ragendes, unbewegliches Stempelelement (14) ist, welches den Erstreckungsweg des Dichtelements (1) in den Ausströmkanal (10,11) begrenzt und die Andruckkante (15) des Stempelelementes (14) Bereiche mit unterschiedlichem Abstand zum in derselben Ebene wie die Andruckkante (12) liegenden Mittelpunkt (13) des Ausströmkanals (10,11) aufweist.

8. Gasgenerator nach Anspruch 1, **dadurch gekennzeichet**, dass das Andruckmittel (2,10,11,14) ein im Bereich des Dichtelements (1) in den AusströmJsanal (10,11) ragendes, im Funktionsfall zur Öffnung der Membrane bewegbares Stempelelement (14) ist, welches den Erstreckungsweg des Dichtelements (1) in den Ausströmkanal (10,11) begrenzt und die Andruckkante (15) des Stempelelementes (14) Bereiche mit unterschiedlichem Abstand zum in derselben Ebene wie die Andruckkante (12) liegenden Mittelpunkt (13) des Ausströmkanals (10,11) aufweist.

## Claims

1. A gas generator for inflating an airbag, comprising a gas pressure vessel (7) and an outflow duct (10, 11) through which the gas stored in the gas pressure vessel (7) flows into the gas bag (8), with a destructible sealing element (1), preferably a membrane, being provided which seals off the outflow duct and which extends in the operating state of the gas generator at least along a section of the outflow duct (10, 11) in the direction of flow of the gas from a region outside of the outflow duct (10, 11) into the same, such that the pressurized sealing element (1) bulges into the outflow duct (10, 11), and an opening mechanism (3, 4, 5), comprising a primer (4) and a nozzle chamber (5) for destroying the sealing element (1) by means of a hot gas jet produced by the ignition of the primer (4) and focused on the sealing element (1) against the direction of flow of the gas pressure vessel gas, with the sealing element (1) being provided with a non-notched configuration and with pressing means (2, 10, 11, 14) being provided, against which the sealing element (1) can be pressed when the gas pressure vessel (7) is filled and the contact between the sealing element (1) and the pressing means (2, 10, 11, 14) occurs at least along a pressing edge (12, 15) with closed circumference and the transition of the membrane (1) from outside of the outflow duct into the outflow duct occurs along the pressing edge (12, 15), **characterized in that** the pressing edge (12, 15) comprises sections that are distanced in a differently far way from a central point (13) of the outflow duct (10, 11) which lies in the same plane as the pressing edge (12).

2. A gas generator according to claim 1, **characterized in that** the pressing means (2, 10, 11, 14) is the outflow duct (10, 11) whose cross-sectional outline in the area of the transition of the sealing element (1) from outside of the outflow duct (10, 11) into the outflow duct (10, 11) comprises sections with different distance to the central point (13) of the outflow duct (10, 11) which lies in the same plane as the cross-sectional surface area in this region.

3. A gas generator according to claim 2, **characterized in that** the outflow duct (10, 11) is formed by an outflow opening (10) arranged in the gas pressure vessel (7), and the sealing element (1) is arranged on the inside of the gas pressure vessel (7) before the outflow opening (10).

4. A gas generator according to claim 3, **characterized in that** the outflow opening (10) has a polygonal or elliptical cross section.

5. A gas generator according to claim 2, **characterized in that** the outflow duct (10, 11) is formed by a pass-through opening (11) arranged on a sealing element carrier (2), with the gas pressure vessel (7) comprising an outflow opening (10) and the sealing element carrier (2) is fastened thereto in a gas-tight manner, and the pass-through opening (11) is arranged concentrically relative to the outflow opening (10), with the sealing element (1) being fastened between the outflow opening (10) and the pass-through opening (11) of the sealing element carrier (2).

6. A gas generator according to claim 5, **characterized in that** the pass-through opening (11) has a polygonal or elliptical cross section.

7. A gas generator according to claim 1, **characterized in that** the pressing means (2, 10, 11, 14) is an immobile stamp element (14) which protrudes into the outflow duct (10, 11) in the region of the sealing element (1) and which limits the path of extension of the sealing element (1) into the outflow duct (10, 11), and the pressing edge (15) of the stamp element (14) comprises regions with a different distance to the central point (13) of the outflow duct (10, 11) which lies in the same plane as the pressing edge (12).

8. A gas generator according to claim 1, **characterized in that** the pressing means (2, 10, 11, 14) is a stamp element (14) which in the functional case is mobile to open the membrane, protrudes into the outflow duct (10, 11) in the region of the sealing element (1) and limits the path of extension of the sealing element (1) into the outflow duct (10, 11), and the pressing edge (15) of the stamp element (14) comprises regions with a different distance to the central point (13) of the outflow duct (10, 11) which lies in the same plane as the pressing edge (12).

## Revendications

1. Générateur de gaz pour gonfler un coussin gonflable de protection, avec un réservoir de gaz sous pression (7) et un canal de sortie (10, 11), par lequel le gaz emmagasiné dans le réservoir de gaz sous pression (7) s'écoule dans le coussin gonflable (8), dans lequel est prévu un élément d'étanchéité (1) destructible fermant le canal de sortie, de préférence une membrane, qui s'étend dans l'état de fonctionnement du générateur de gaz au moins le long d'une partie du canal de sortie (10, 11) dans le sens d'écoulement du gaz depuis une zone située à l'extérieur du canal de sortie (10, 11) jusqu'à l'intérieur de celui-ci par le fait que l'élément d'étanchéité (1) soumis à une pression se bombe dans le canal de sortie (10, 11), et il est prévu un mécanisme d'ouverture (3, 4, 5) comprenant au moins une pastille d'allumage (4) et une chambre de tuyère (5) pour détruire l'élément d'étanchéité (1) au moyen d'un jet de gaz chaud dirigé vers l'élément d'étanchéité (1) en sens inverse du sens d'écoulement du réservoir de gaz sous pression et produit par l'allumage de la pastille d'allumage (4), l'élément d'étanchéité (1) étant réalisé sans entaille et des moyens d'appui (2, 10, 11, 14) étant prévus, contre lesquels l'élément d'étanchéité (1) peut être pressé quand le réservoir de gaz sous pression (7) est plein et le contact entre l'élément d'étanchéité (1) et les moyens d'appui (2, 10, 11, 14) ayant lieu au moins le long d'un bord d'appui (12, 15) ayant un contour fermé et la transition de la membrane (1) entre l'extérieur du canal de sortie et l'intérieur du canal de sortie se faisant le long du bord d'appui (12, 15), **caractérisé en ce que** le bord d'appui (12, 15) présente des sections qui se trouvent à différentes distances d'un point central (13) du canal d'écoulement (10, 11) situé dans le même plan que le bord d'appui (12).

2. Générateur de gaz selon la revendication 1, **caractérisé en ce que** le moyen d'appui (2, 10, 11, 14) est le canal de sortie (10, 11) dont la section présente dans la zone de transition de l'élément d'étanchéité (1) entre l'extérieur du canal de sortie (10, 11) et l'intérieur du canal de sortie (10, 11) des sections situées à différentes distances du point central (13) du canal d'écoulement (10, 11) qui se trouve dans le même plan que l'aire de section dans cette zone.

3. Générateur de gaz selon la revendication 2, **caractérisé en ce que** le canal de sortie (10, 11) est formé par une ouverture de sortie (10) disposée dans le réservoir de gaz sous pression (7) et l'élément d'étanchéité (1) est disposé sur la face intérieure du réservoir de gaz sous pression (7) devant l'ouverture de sortie (10).

4. Générateur de gaz selon la revendication 3, **caractérisé en ce que** l'ouverture de sortie (10) a une section polygonale ou elliptique.

5. Générateur de gaz selon la revendication 2, **caractérisé en ce que** le canal d'écoulement (10, 11) est formé par une ouverture de passage (11) disposée sur un support d'élément d'étanchéité (2), le réservoir de gaz sous pression (7) présentant une ouverture de sortie (10) et le support d'élément d'étanchéité (2) étant fixé à sa suite de façon étanche au gaz, et l'ouverture de passage (11) est concentrique par rapport à l'ouverture de sortie (10), l'élément d'étanchéité (1) étant fixé entre l'ouverture de sortie (10) et l'ouverture de passage (11) du support d'élément d'étanchéité (2).

6. Générateur de gaz selon la revendication 5, **caractérisé en ce que** l'ouverture de passage (11) présente une section polygonale ou elliptique.

7. Générateur de gaz selon la revendication 1, **caractérisé en ce que** le moyen d'appui (2, 10, 11, 14) est un élément de poinçon (14) immobile dépassant au niveau de l'élément d'étanchéité (1) dans le canal d'écoulement (10, 11), qui limite la distance d'étendue de l'élément d'étanchéité (1) dans le canal de sortie (10, 11) et le bord d'appui (15) de l'élément de poinçon (14) présente des zones situées à différentes distances du point central (13) du canal de sortie (10, 11) qui se trouve dans le même plan que le bord d'appui (12).

8. Générateur de gaz selon la revendication 1, **caractérisé en ce que** le moyen d'appui (2, 10, 11, 14) est un élément de poinçon (14) mobile dans le cas de fonctionnement pour ouvrir la membrane, qui dépasse au niveau de l'élément d'étanchéité (1) dans le canal de sortie (10, 11) et qui délimite la distance d'étendue de l'élément d'étanchéité (1) dans le canal de sortie (10, 11), et le bord d'appui (15) de l'élément de piston (14) présente des zones situées à différentes distances du point central (13) du canal de sortie (10, 11) qui se trouve dans le même plan que le bord d'appui (12).
